# EUROPEAN PATENT APPLICATION

(11) **EP 1 246 155 A2**
(43) Date of publication of application: **02.10.2002**
(21) Application number: 02006523.1
(22) Date of filing: 19.03.2002
(51) Int. Cl.: G09G 3/20, G09G 5/28

(54) **Display method and display apparatus with colour correction for subpixel light emitting patterns resulting in insufficient contrast**

(30) Priority: 26.03.2001 JP 2001087237
(71) Applicant: MATSUSHITA ELECTRIC INDUSTRIAL CO., LTD., Kadoma-shi, Osaka 571-8501 (JP)
(72) Inventor: Tadanori, Tezuka, Honamimachi, Obasa 357-29-202 (JP); Hiroyuki, Yoshida, Banchi 3, Ventahahillss, Asagurii-1010 (JP); Bunpei, Toji, Ko-P0rasuatorie 206 Gou (JP)
(74) Representative: Balsters, Robert

(57) **Abstract**

When a sub-pixel of B having a low degree of contribution to luminance emits light in isolation, a sub-pixel of R is caused to emit light or sub-pixels of B and R are caused to emit light. As a result, a sub-pixel of R having a higher degree of contribution to luminance than the sub-pixel of B is caused to emit light. When a set of sub-pixels B and R having a low degree of contribution to luminance emits light in isolation, a set of sub-pixels R and G is caused to emit light. As a result, a set of sub-pixels R and G having a higher degree of contribution to luminance than the set of sub-pixels B and R is caused to emit light. Therefore, it is possible to prevent the contrast from being lowered due to any allocation of light-emitting patterns to sub-pixels and possible to achieve a high quality display.

## Description

The present invention relates to a display method of a display device in which light-emitting elements of three primary colors R, G and B are aligned, and art related to this display method.

Display equipment that employs various types of display devices is well known and used in the past. Included among such display devices are color LCD's, color plasma displays, and other display devices, in which three light-emitting elements, which respectively emit light of the three primary colors of R, G, and B, are aligned in a fixed order in a first direction to form one pixel. A plurality of such pixels is aligned in the first direction to form one line. A plurality of such lines is aligned in a second direction, which is orthogonal to the first direction, to form the display screen.

There are also many display devices, such as a display device in a portable telephone, mobile computer, etc., which have a relatively narrow display screen and in which detailed display is difficult to achieve. When the display of a small character, photograph, or complex picture, etc. is attempted with such a display device, part of the image tends to become smeared and unclear.

Literature (titled: "Sub Pixel Font Rendering Technology") concerning sub-pixel displays, which makes use of each pixel being formed of the three light-emitting elements for R, G, and B to improve the clarity of the display on a narrow screen, is disclosed on the Internet. The present inventors have checked this literature upon downloading it from the site, http://grc.com, or its subordinate.

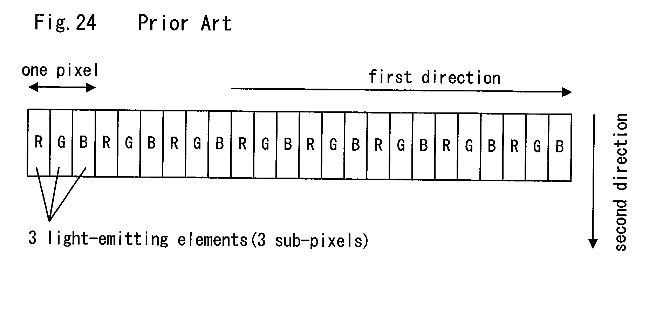

This art is described with reference to Figs. 24 to 29. In the following description, the image of the alphabetic character, "A", is used as an example of the image to be displayed.

Referring to Fig. 24, each single line is composed of a plurality of pixels, each of which is formed from three light-emitting elements aligned along the direction of the line. The horizontal direction in Fig. 24 (the direction in which the light-emitting elements of the three primary colors of R, G, and B are aligned) is referred to as the first direction. The orthogonal, vertical, direction is referred to as the second direction. Any order of alignment of the light-emitting elements besides R, G, and B is possible. The prior art and the present invention are applied likewise even if the order of alignment is changed.

A pixel (set of three light-emitting elements) is aligned in a single row in the first direction to arrange a single line. A plurality of lines is aligned in the second direction to arrange the display screen.

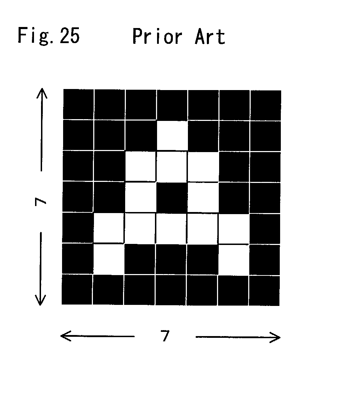

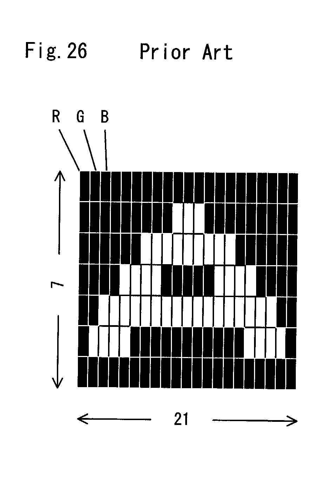

With this sub-pixel technology, the original image is, for example, an image such as shown in Fig. 25. In this example, the character, "A", is displayed over an area of seven pixels each in the horizontal and vertical directions. Where each of the R, G, and B light-emitting elements is handled as a single pixel in order to perform sub-pixel display, a font, which has a definition of three times that of the above-described image in the horizontal direction, is prepared, as shown in Fig. 26, over an area of 21 (= 7 x 3) pixels in the horizontal direction and 7 pixels in the vertical direction.

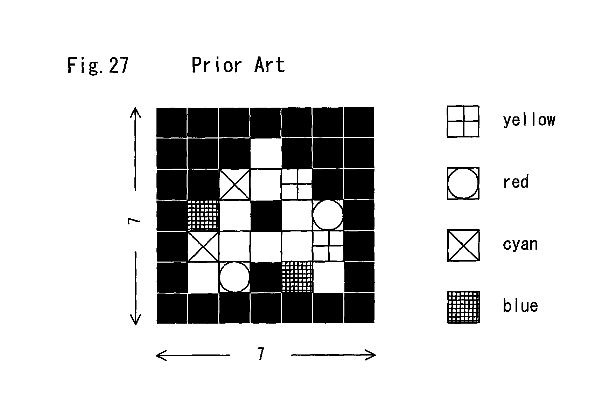

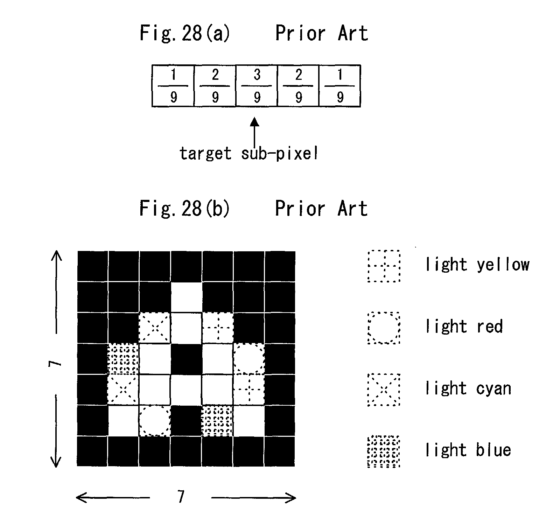

Then as shown in Fig. 27, a color is determined for each of the pixels in Fig. 25 (i.e. not the pixels of Fig. 26 but the pixels of Fig. 25). However, since color irregularities occur if display is performed as it is, a filtering process, using factors such as shown in Fig. 28(a), is applied. Factors concerning the luminance are shown in Fig. 28(a). The luminance values of the respective sub-pixels are adjusted by multiplying a factor, for example, of 3/9 in the case of the central target sub-pixel, of 2/9 in the case of an adjacent sub-pixel, and of 1/9 in the case of the sub-pixel next to the adjacent sub-pixel.

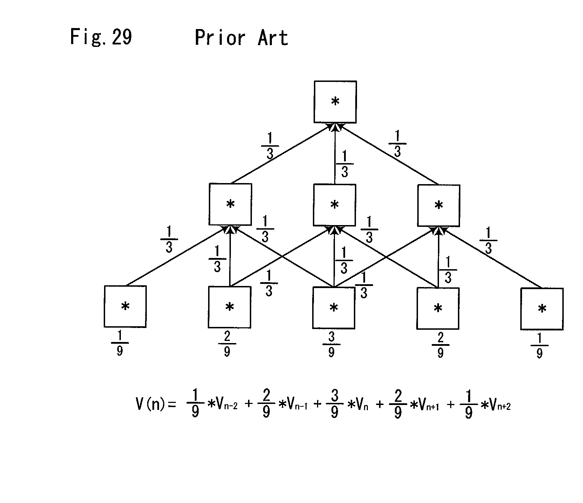

These factors are now described in more detail with reference to Fig. 29. In Fig. 29, the "*" indicates that the sub-pixel may be any of the three primary color light-emitting elements for R, G, and B. The determination of the factors is started from the first stage at the top and proceeds to the second stage and the third stage. The factor of the central target sub-pixel is determined at the center of the third stage. In proceeding from the first stage to the second stage, energy is collected uniformly among the three primary color light-emitting elements for R, G, and B, that is, the factor of the first stage is just 1/3. Likewise, energy is collected uniformly in proceeding from the second stage to the third stage, that is, the factor of the second stage is also just 1/3.

Since the central sub-pixel is reached from the first stage via a total of three paths at the center, left, and right sides of the second stage, the synthetic factor (in which the factors of the first and second stages are synthesized) of the central sub-pixel is 1/3 x 1/3 + 1/3 x 1/3 + 1/3 x 1/3 = 3/9. Also, since a sub-pixel adjacent the central pixel is reached via two paths, the synthetic factor thereof is 1/3 x 1/3 + 1/3 x 1/3 = 2/9. Since there is only one path for a next adjacent sub-pixel, the synthetic factor thereof is 1/3 x 1/3 = 1/9.

However, in a case where detailed expression is carried out by utilizing such sub-pixels, for example, if there is a part where only isolated Blue (B) is emitted when an original image is allocated to sub-pixels, the contrast of the part is lowered since the luminance of Blue (B) is lower than that of the other light-emitting elements, and there arises such a problem in which the part can be scarcely observed.

Therefore, it is an object of the invention to provide a display method and a display apparatus that are able to suppress a lowering in contrast due to allocation of light-emitting patterns to sub-pixels and is able to achieve a high quality display.

A first aspect of this invention provides in a method of performing display with a display device, with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen; the same method comprises the steps of: correcting a light-emitting pattern so that the contrast becomes high where sub-pixel data having a light-emitting pattern defined in advance exist in sub-pixel data obtained from data of an image to be displayed; and allocating sub-pixel data to the light-emitting elements corresponding thereto after the correcting step and performing display with the display device.

A display apparatus of a second aspect of this invention is equipped with a display device, in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen, a correcting unit, which corrects a light-emitting pattern so that the contrast becomes high where sub-pixel data having a light-emitting pattern defined in advance exist in sub-pixel data obtained from data of an image to be displayed , and a display control unit , which allocates sub-pixel data to the light-emitting elements corresponding thereto after the correction by the correcting unit and makes the display device perform display.

With the above-described construction, in the display method according to the first aspect of this invention and the display apparatus according to the second aspect thereof, a light-emitting pattern can be corrected by setting a pattern for lowering the contrast as a light-emitting pattern defined in advance, so that the contrast becomes high if sub-pixel data having the light-emitting pattern exist.

As a result, it is possible to prevent the contrast from being lowered due to any allocation of light-emitting patterns to sub-pixels and possible to achieve a high quality display.

A third aspect of this invention provides in a method of performing display with a display device, with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen; the same method comprises the steps of: magnifying data of an image to be displayed by two times in the first direction to generate sub-pixel data; and allocating sub-pixel data to the light-emitting elements corresponding thereto and performing display with the display device.

A display apparatus of a fourth aspect of this invention is equipped with a display device, in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen, a two-time magnifying unit, which magnifies data of an image to be displayed, by two times in the first direction to generate sub-pixel data, and a display control unit, which allocates the sub-pixel data to light-emitting elements corresponding thereto and makes the display device perform display.

With the above-described construction, in the display method according to the third aspect of this invention and the display apparatus according to the fourth aspect thereof, it is possible to obtain an image reduced to two-thirds (2/3) in comparison with an original image. Resultantly, it is possible to increase the number of characters that can be displayed in a display device of the same size.

Also, when original data of one pixel are displayed on the display device, the data are allocated to two light-emitting elements (sub-pixels). As a result, no light-emitting pattern whose contrast is remarkably low is generated.

A fifth aspect of this invention provides in a method of performing display with a display device, with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen; the same method comprises a first step of searching data of an image having a pattern in which only one pixel positioned at the center emits light, from three pixels adjacent to each other in the first direction among image data to be displayed; a step of generating sub-pixel data by magnifying the data of an image to be displayed, by two times in the first direction; a second step of searching sub-pixel data having a light-emitting pattern defined in advance from the sub-pixel data corresponding to the data of the image where data of an image having the pattern, in which only one pixel positioned at the center emits light, exist according to the result of the first searching step; a step of correcting the light-emitting pattern so that the contrast becomes high where the sub-pixel data having the light-emitting pattern defined in advance, exist according to the result of the second searching step; and a step of allocating the sub-pixel data to the light-emitting elements corresponding thereto after the correcting step and performing display with the display device.

A display apparatus of a sixth aspect of this invention is equipped with a display device, in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen, a two-time magnifying unit, which searches data of an image having a pattern, in which only one pixel positioned at the center emits light, from three pixels adjacent to each other in the first direction among image data to be displayed, and generates sub-pixel data by magnifying the image data to be displayed, by two times in the first direction, a correcting unit , which searches sub-pixel data having a light-emitting pattern defined in advance, from the sub-pixel data corresponding to the image data where image data having the pattern, in which only one pixel positioned at the center emits light, exist according to the result of a search by the two-time magnifying unit, and corrects the light-emitting pattern, so that the contrast becomes high, where sub-pixel data having the light-emitting pattern defined in advance exist according to the result of a search, and a display control unit , which allocates the sub-pixel data to the light-emitting elements corresponding thereto after the correction by the correcting unit and makes the display device perform display.

With the above-described construction, in the display method according to the fifth aspect of this invention and the display apparatus according to the sixth aspect thereof, the light-emitting pattern is corrected by setting a pattern, by which the contrast is lowered, as the light-emitting pattern defined in advance, so that the contrast becomes high where sub-pixel data having the light-emitting pattern exist.

As a result, since it is possible to prevent the contrast from being lowered due to any allocation of the light-emitting pattern to the sub-pixels, a high-quality display can be achieved.

Further, since the sub-pixel data having the light-emitting pattern defined in advance can be searched from sub-pixel data obtained from image data having the pattern in which only one pixel emits light in isolation, it is not necessary to search the light-emitting pattern defined in advance from all of the obtained sub-pixel data. As a result, it is possible to shorten the time required for search of the light-emitting pattern defined in advance.

A seventh aspect of this invention provides in a method of performing display with a display device, with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen; the same method comprises the steps of: generating binary sub-pixel data by determining a state of emitting light or a state of not emitting light on the basis of a threshold value defined in advance, with respect to sub-pixel data of multiple values, which are obtained from multiple-value image data to be displayed; searching binary sub-pixel data having a light-emitting pattern defined in advance from the binary sub-pixel data; correcting a light-emitting pattern of the multiple-value sub-pixel data corresponding to the searched binary sub-pixel data so that the contrast becomes high where binary sub-pixel data having the light-emitting pattern defined in advance are searched in the searching step; and allocating multiple-value sub-pixel data to light-emitting elements corresponding thereto after the correcting step, and performing display with the display device.

A display apparatus of an eighth aspect of this invention is equipped with a display device, in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen, a binary data generating unit, which generates binary sub-pixel data by determining a state of emitting light or a state of not emitting light on the basis of a threshold value defined in advance, with respect to sub-pixel data of multiple values, which are obtained from multiple-value image data to be displayed, a correcting unit, which searches binary sub-pixel data having a light-emitting pattern defined in advance from the binary sub-pixel data and corrects a light-emitting pattern of the multiple-value sub-pixel data corresponding to the searched binary sub-pixel data so that the contrast becomes high, and a display control unit, which allocates multiple-value sub-pixel data to light-emitting elements corresponding thereto after the correcting step, and makes the display device perform display.

With the above-described construction, in the display method according to the seventh aspect of this invention and the display apparatus according to the eighth aspect thereof, where binary sub-pixel data having the light-emitting pattern defined in advance exist, the light-emitting pattern of the multiple-value sub-pixel data corresponding thereto can be corrected, by setting a pattern for lowering the contrast as the light-emitting pattern defined in advance, so that the contrast becomes high.

As a result, it is possible to prevent the contrast from being lowered due to any allocation of the light-emitting patterns to the sub-pixel data, and a high-quality multiple-value image can be displayed.

The above, and other objects, features and advantages of the present invention will become apparent from the following description read in conjunction with the accompanying drawings, in which like reference numerals designate the same elements.
Fig. 1 is a block diagram of a display apparatus according to a first embodiment of the present invention;
Fig. 2 is a block diagram showing a sub-pixel rendering process unit in the first embodiment of the invention;
Fig. 3(a) is a view describing a process for generating sub-pixel data in the first embodiment of the invention;
Fig. 3(b) is a view describing a process for generating sub-pixel data in the first embodiment of the invention;
Fig. 3(c) is a view describing a process for generating sub-pixel data in the first embodiment of the invention;
Fig. 4(a) is a view describing the rules of a correcting process in the first embodiment of the invention;
Fig. 4(b) is a view describing the rules of a correcting process in the first embodiment of the invention;
Fig. 4(c) is a view describing the rules of a correcting process in the first embodiment of the invention;
Fig. 5(a) is a plan view showing sub-pixel data before the correcting process in the first embodiment of the invention;
Fig. 5(b) is a plan view showing sub-pixel data after the correcting process in the first embodiment of the invention;
Fig. 6(a) is an image view where no correcting process according to the first embodiment of the invention is carried out;
Fig. 6(b) is an image view where a correcting process according to the first embodiment of the invention is carried out;
Fig. 7 is a flow chart of a display apparatus according to the first embodiment of the invention;
Fig. 8 is a flow chart of a correcting process in the first embodiment of the invention;
Fig. 9 is a block diagram of a sub-pixel rendering process unit according to a second embodiment of the invention;
Fig. 10(a) is a view describing a sub-pixel data generating process according to the second embodiment of the invention;
Fig. 10(b) is a view describing a sub-pixel data generating process according to the second embodiment of the invention;
Fig. 10(c) is a view describing a sub-pixel data generating process according to the second embodiment of the invention;
Fig. 11(a) is a view describing the degree of contribution of sub-pixel data to luminance;
Fig. 11(b) is a view describing the degree of contribution of sub-pixel data to luminance;
Fig. 12(a) is a view describing the rules of a correcting process in the second embodiment of the invention;
Fig. 12(b) is a view describing the rules of a correcting process in the second embodiment of the invention;
Fig. 13(a) is an image view where no correcting process is carried out in the second embodiment of the invention;
Fig. 13(b) is an image view where a correcting process is carried out in the
second embodiment of the invention;
Fig. 14 is a flow chart of a display apparatus according to the second embodiment of the invention;
Fig. 15 is a flow chart of a two-time magnifying process in the second embodiment of the invention;
Fig. 16 is a flow chart of a correcting process according to the second embodiment of the invention;
Fig. 17 is a block diagram of a display apparatus according to the third embodiment of the invention;
Fig. 18 is a block diagram of a sub-pixel rendering process unit according to the third embodiment of the invention;
Fig. 19 is a flow chart of a display apparatus according to the third embodiment of the invention;
Fig. 20 is a flow chart of a correcting process according to the third embodiment of the invention;
Fig. 21(a) is a view exemplifying multiple-value image data that are inputted in a sub-pixel data generating unit according to the third embodiment of the invention;
Fig. 21(b) is a view exemplifying multiple-value sub-pixel data that are generated by a sub-pixel data generating unit according to the third embodiment of the invention;
Fig.21(c) is a view exemplifying binary sub-pixel data that are generated by a binary data generating unit according to the third embodiment of the invention;
Fig. 22(a) is a view describing rules of a correcting process according to the
third embodiment of the invention;
Fig. 22(b) is a view describing rules of a correcting process according to the third embodiment of the invention;
Fig. 22(c) is a view describing rules of a correcting process according to the third embodiment of the invention;
Fig. 23(a) is a view describing another example of the rules of a correcting process according to the third embodiment of the invention;
Fig. 23(b) is a view describing still another example of the rules of a correcting process according to the third embodiment of the invention;
Fig. 23(c) is a view describing still another example of the rules of a correcting process according to the third embodiment of the invention;
Fig. 24 is an exemplary view of one line according to a prior art;
Fig. 25 is a view exemplifying an original image according to the prior art;
Fig. 26 is a view exemplifying a triple-time magnified image according to the prior art;
Fig. 27 is a view describing a color determining process according to the prior art;
Fig. 28(a) is a view describing coefficients for a filtering process according to the prior art;
Fig. 28(b) is a view exemplifying the results of a filtering process according to the prior art; and
Fig. 29 is a view describing coefficients for a filtering process according to the prior art.

Hereinafter, a description is given of embodiments of the invention with reference to the accompanying drawings.

### [Embodiment 1]

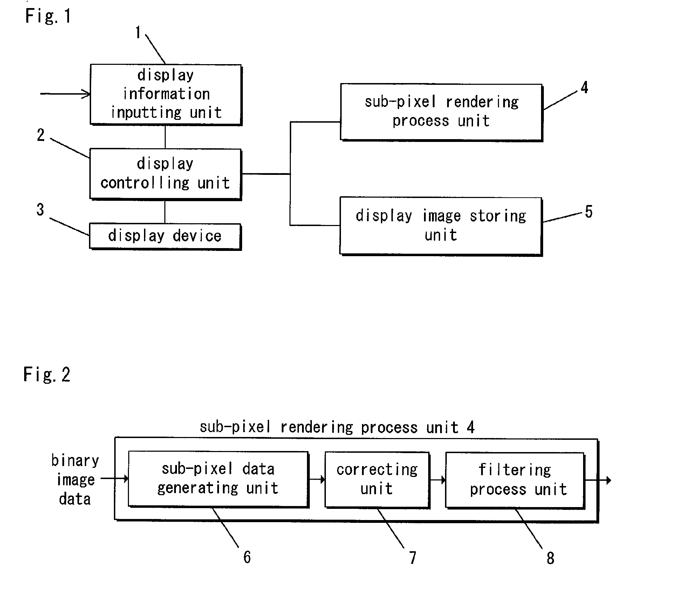

Fig. 1 is a block diagram of a display apparatus according to a first embodiment of the present invention. As shown in Fig. 1, the display apparatus is provided with display information inputting unit 1, display controlling unit 2, a display device 3, sub-pixel rendering process unit 4, and display image storing unit 5.

In Fig. 1, the display information inputting unit 1 inputs display information, wherein the display information inputted here is binary image data.

Also, the display controlling unit 2 makes a display device 3 perform display on the basis of display data that are stored by the display image storing unit 5 (VRAM, etc.) for displaying sub-pixels.

The display device 3 employs sets of three light-emitting elements, which respectively emit light of the three primary colors of R, G, and B. The three light-emitting elements of a set are aligned in a fixed order to form one pixel. A plurality of pixels thus formed is aligned in a first direction to form one line. A plurality of such lines is aligned in a second direction, which is orthogonal to the first direction, to form the display screen. To be more specific, the display device 3 is a color LCD (Liquid Crystal Display), a color plasma display, or an organic EL (Electroluminescescent) display, etc., including a suitable driver for driving the respective elements of the color LCD, the color plasma display, or the organic EL display etc.

The sub-pixel rendering process unit 4 generates sub-pixel data on the basis of display information that are inputted by the display information inputting unit 1, and further carries out a correcting process and a filtering process.

Fig. 2 is a block diagram showing a sub-pixel rendering process in Fig. 1. As shown in Fig. 2, the sub-pixel rendering process unit 4 includes sub-pixel data generating unit 6, correcting unit 7 and filtering process unit 8.

Hereinafter, where it is assumed that display information that is inputted by the display information inputting unit 1 is binary image data, a description is given of actions of the respective components.

The sub-pixel data generating unit 6 generates sub-pixel data on the basis of the inputted binary image data. For example, where an image, which is of the same magnification as that of the inputted binary image, is displayed on the display device 3, the inputted binary image data are magnified by three times in the first direction to generate sub-pixel data. This point is described in further detail.

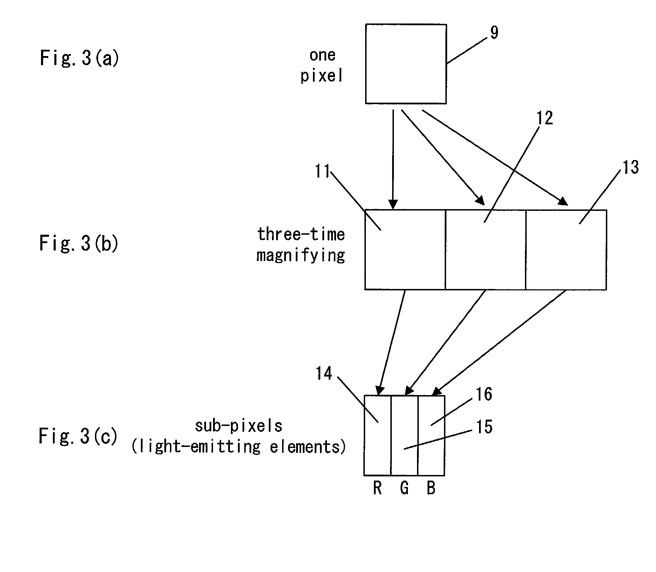

Figs. 3 are views describing a process for generating sub-pixel data in the first embodiment of the invention. In Figs. 3, a case is taken into consideration as one example, where an image that is of the same magnification as the inputted binary image is displayed on the display device 3. Also, only one pixel of the inputted binary image data is noted for convenience of explanation.

The sub-pixel data generating unit 6 magnifies data 9 (Fig. 3(a)) of the inputted one pixel by three times in the first direction and obtains sub-pixel data 11, 12 and 13 (Fig. 3(b)). The three sub-pixel data 11, 12 and 13 are allocated to three sub-pixels (light-emitting elements) 14, 15 and 16 of R, G and B (Fig. 3(c)).

Therefore, as has been made clear through a comparison between Fig. 3(a) and Fig. 3(c), an image that is of the same magnification as the inputted binary image can be obtained.

Herein, a "sub-pixel" indicates each of the elements that are obtained by dividing one pixel into three equal divisions in the first direction. Therefore, since one pixel is constituted by aligning three light-emitting elements, which emit three primary colors of R. G and B, in a fixed sequence, three sub-pixels of R, G and B correspond to three light-emitting elements of R, G and B.

Therefore, where an image that is obtained by reducing the inputted binary image by one-second is acquired as another example, the sub-pixel data generating unit 6 magnifies the inputted binary image data by three-seconds in the first direction and is reduced by one-second in the second direction.

Generally, where an image that is magnified or reduced by "A" times in the first direction with respect to the inputted binary image is displayed on the display device 3, it is necessary that the inputted binary image data are magnified or reduced by "C" times in the first direction. However, 3 X A = C.

Also, where an image that is magnified or reduced by "D" times in the second direction with respect to the inputted binary image is displayed on the display device 3, it is necessary that the inputted binary image data are magnified or reduced by "E" times in the second direction. However, D = E.

As described above, the sub-pixel data generating unit 6 generates sub-pixel data suited to a display size in the display device 3 on the basis of the inputted binary image data. In the above description, an example in which the display size of the display device 3 is made into the same magnification as the inputted binary image or one-second reduction thereof is employed. However, the magnification is not limited to the above, but may be optionally set. And, magnification of binary image data to generate sub-pixel data is determined in response to the above-described magnification.

In addition, where binary image data has been already processed to sub-pixel data, no process in the sub-pixel data generating unit 6 is carried out, and the binary image data are directly inputted into the correcting unit 7.

Next, a brief description is given of actions of the correcting unit 7.

First, the correcting unit 7 searches sub-pixels having a specified light-emitting pattern. Next, the correcting unit 7 corrects for the light-emitting pattern so that contrast becomes high.

Next, a detailed description is given of actions of the correcting unit 7.

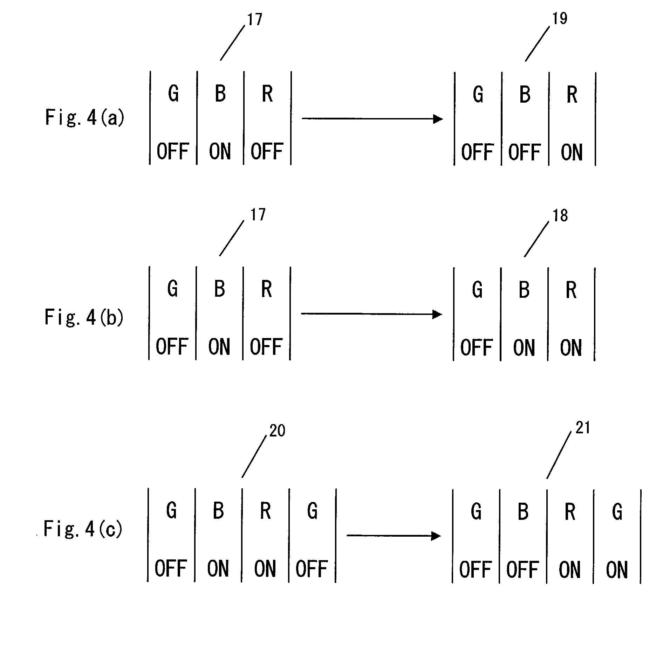

Figs. 4 are conceptual views showing states where sub-pixel data are allocated to sub-pixels, and are used to explain the rules of a correcting process in the correcting unit 7 in Fig. 2.

Since image data that are inputted into the sub-pixel data generating unit 6 are binary image data, for simplification in Figs.4, sub-pixel data are expressed to be ON where a sub-pixel (light-emitting element) is caused to emit light, and sub-pixel data are expressed to be OFF where a sub-pixel (light-emitting element) is not caused to emit light. Also, a row of sub-pixels (light-emitting elements) in the display device 3 is the sequence of R, G and B.

And, in the following description, colors of sub-pixels (light-emitting elements) and light-emitting states are expressed to be R (ON), R (OFF), G (ON), G (OFF), B (ON), and B (OFF) in combinations.

As shown in Fig. 4(a), the correcting unit 7 searches sub-pixel data 17, having a specified light-emitting pattern (a light-emitting pattern defined in advance) where Blue (B) is emitted light in isolation, which are G (OFF), B (ON) and R (OFF) as a row of sub-pixels.

And, the correcting unit 7 corrects the sub-pixel data 17 so that the sub-pixel of B is turned [OFF] and the sub-pixel of R is turned [ON], thereby causing a row of the sub-pixels to be made into sub-pixel data 19 of G (OFF), B (OFF), and R (ON).

Or, the correcting unit 7 corrects the searched sub-pixel data 17, as shown in Fig. 4(b), so that sub-pixels of B and R are turned [ON], and a row of the sub-pixels is made into G (OFF), B (ON), and R (ON).

Also, on one hand, as shown in Fig. 4(c), the correcting unit 7 searches sub-pixel data 20, having a specified light-emitting pattern (a light-emitting pattern defined in advance) in which a set of B (Blue) and R (red) emit light in isolation, where a row of the sub-pixels is G (OFF), B (ON), R (ON) and G (OFF).

And, the correcting unit 7 corrects the sub-pixel data 20 so that the sub-pixel of B is turned [OFF] and the sub-pixels of R and G are turned [ON], wherein sub-pixel data 21 are obtained, in which a row of the sub-pixels is G (OFF), B (OFF), R (ON), and G (ON).

As described above, the reasons why a pattern, in which B emits light in isolation, is set as a specified light-emitting pattern that is searched by the correcting unit 7 are as follows.

Generally, it is said that the contribution to the degree of luminance of R, G and B is R:G:B = 3:6:1. Therefore, it can be said that, a case where only B emits light in isolation generates one-third brightness in comparison with a case where only R emits light in isolation, and one-sixth brightness in comparison with a case where only G emits light in isolation.

That is, luminance in a place where only B emits light in isolation becomes low, and contrast of the place is lowered. Accordingly, if there is a light-emitting pattern of G(OFF), B(ON) and R(OFF), it is necessary to improve the contrast by correcting the light-emitting pattern.

Therefore, if a light-emitting pattern of G(OFF), B(OFF), and R(ON) (sub-pixel data 19 in Fig. 4(a)) or another light-emitting pattern of G(OFF), B(ON) and R(ON) (sub-pixel data 18 in Fig. 4(b)) is employed by correcting the light-emitting pattern of G(OFF), B(ON) and R(OFF) (sub-pixel data 17 in Figs. 4(a) and (b)), it is possible to obtain luminance which is greater by three or four times, wherein the contrast can be remarkably improved.

This is due to the same reason that a pattern in which a set of B and R emits light in isolation is set as the light-emitting pattern that is searched by the correcting unit 7.

Therefore, if a light-emitting pattern (sub-pixel data 21 in Fig. 4(c)) of G(OFF), B(OFF), R(ON), and G(ON) is employed by correcting the light-emitting pattern (sub-pixel data 20) of G(OFF), B(ON), R(ON) and G(OFF), it is possible to obtain luminance that is greater by nine-fourths (9/4), wherein the contrast can be improved.

Also, in addition to the corrections shown in Fig. 4(a) and (b), the light-emitting pattern of G(OFF), B(ON), R(OFF) can be corrected to be G(ON), B(OFF), and R(OFF) or G(ON), B(ON), and R(OFF). In this case, effects that are the same as in the above can be achieved.

Also, in addition to the correction shown in Fig. 4(c), the light-emitting pattern of G(OFF), B(ON), R(ON) and G(OFF) can be corrected to be G(ON), B(ON), R(OFF) and G(OFF). In this case, an effect that is the same as in the above can be achieved.

As described above, in the present embodiment, taking note of the sub-pixels of B that has the lowest degree of contribution to the luminance of the three primary colors of R, G and B, when the sub-pixel of B or a set of sub-pixels of B and R emits light in isolation, contrast can be improved by causing the sub-pixel of R or G, which further greatly contributes to luminance than the sub-pixel of B, to emit light.

In addition, although a correcting process is carried out with respect to rows (light-emitting pattern) of sub-pixels shown in Figs. 4, an effect which is almost the same effect as in the above can be achieved by carrying out a correcting process in rows (light-emitting pattern) of other sub-pixels in order to strengthen the contrast.

A detailed description is given of a correcting process in the correcting unit 7.

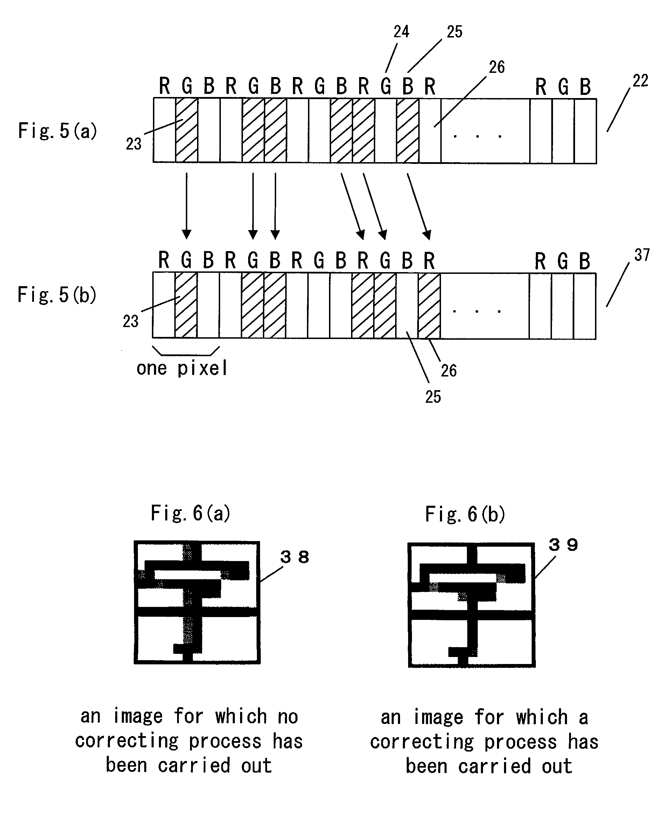

Figs. 5 are views exemplifying a correcting process in the correcting unit 7. Fig. 5(a) shows one line in the first direction of sub-pixel data 22 before the correcting process, and Fig. 5(b) shows one line in the first direction of sub-pixel data 37 after the correcting process.

Also, in Figs. 5, a state is shown, where sub-pixel data are allocated to sub-pixels for convenience of description. And, in the same drawing, sections shown with diagonal lines express sub-pixels caused to emit light.

Further, in Figs. 5, a specified light-emitting pattern shown in Figs. 4 is employed as the specified light-emitting pattern that the correcting unit 7 searches. Correction is subject to the rules shown in Figs. 4.

The correcting unit 7 searches sub-pixel data having the specified light-emitting pattern. For example, as shown in Fig. 5(a), a sub-pixel 23 of G(ON) is not a specified light-emitting pattern. Therefore, the sub-pixel 23 of G(ON) will be turned [ON] (is caused to emit light) as it is, in a sub-pixel 37 after the correction, as shown in Fig. 5(b).

Also, for example, where the correcting unit 7 detects sub-pixel data having a specified light-emitting pattern in which a row of sub-pixels becomes a sub-pixel 24 of G(OFF), a sub-pixel 25 of B(ON), and a sub-pixel 26 of R(OFF) as shown in Fig. 5(a), the light-emitting pattern is corrected so that the contrast becomes high.

That is, in this case, as shown in Fig. 5(b), the correction is made so that the sub-pixel 25 of B(ON) is turned [OFF] and the sub-pixel 26 of R(OFF) is turned [ON].

Figs. 6 are plan views of an image in the case where no correcting process is carried out and an image in the case where a correcting process is carried out.

Fig. 6(a) shows an image 38 in the case where no correcting process is carried out, and Fig. 6(b) shows an image 39 in the case where a correcting process is carried out.

The image 39 in the case where a correcting process has been carried out has a large difference in brightness. In particular, the sections shown by vertical lines become darker than in the case where no correcting process has been carried out. As a result, it is found that the contrast with respect to the background (white) has been improved.

Thus, through a correcting process, it is possible to improve the contrast especially with respect to fine lines, whereby display can be made more easily visible.

Based on the above description, next, a description is given of a process flow of a display apparatus according to the first embodiment of the present invention with reference to the accompanying drawings.

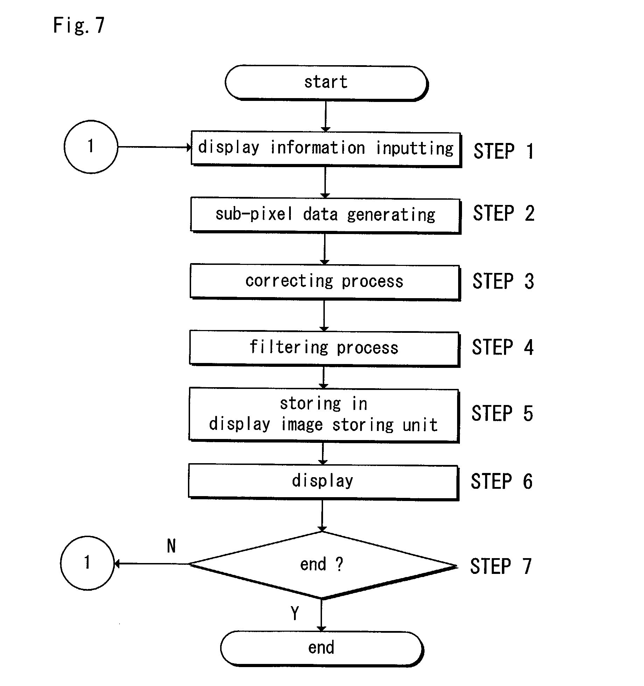

Fig. 7 is a flow chart of a display apparatus according to the first embodiment of the invention. As shown in Fig. 7, first, in STEP 1, display information is inputted in display information inputting unit 1. As described above, display information to be inputted is binary image data.

Next, in STEP 2, the binary image data are given to sub-pixel data generating unit 6, in which sub-pixel data are generated.

Next, in STEP 3, the correcting unit 7 carries out a correcting process with respect to sub-pixel data that are inputted from the sub-pixel data generating unit 6. Herein, a specified light-emitting pattern in which only B emits light in isolation, and a specified light-emitting pattern in which a set of B and R emits light in isolation are searched, and are subjected to correction.

Next, in STEP 4, filtering process unit 8 carries out a filtering process for sub-pixel data that are inputted from and corrected by the correcting unit 7.

The filtering process is carried out with respect to the result of the correcting process in STEP 3 in order to suppress color irregularities. For example, a filtering process, which is described in Fig. 24 through Fig. 29, that is, a filtering process that is disclosed in Literature (Title: "Sub Pixel Font Rendering Technology" (http://grc.com) regarding a sub-pixel display may be utilized as the above-described filtering process.

Next, in STEP 5, the filtering process unit 8 returns the post-process sub-pixel data to the display controlling unit 2, and the display controlling unit 2 stores the received sub-pixel data in the display image storing unit 5.

Next, in STEP 6, the display controlling unit 2 allocates the sub-pixel data, which are stored in the display image storing unit 5, to three light-emitting elements, constituting one pixel, of a display device 3, and makes the display device 3 perform display.

And, unless the display is terminated (STEP 7), the display controlling unit 2 returns the process to STEP 1.

Next, a description is given of a flow of a correcting process in STEP 3 in Fig. 7.

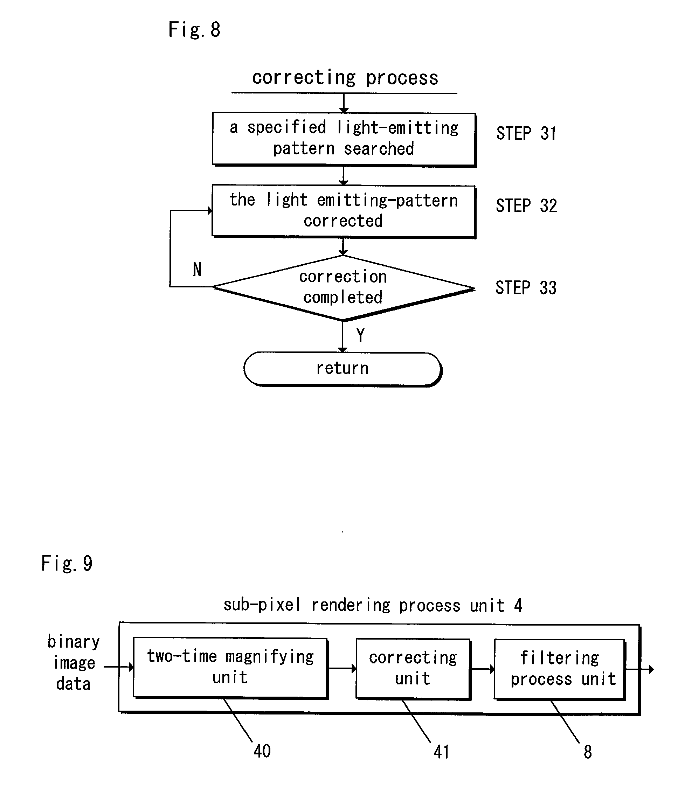

Fig. 8 is a flow chart of a correcting process in STEP 3 in Fig. 7. As shown in Fig. 8, in STEP 31, the correcting unit 7 searches sub-pixel data having a specified light-emitting pattern.

Next, in STEP 32, the correcting unit 7 corrects the light-emitting pattern so that the contrast becomes high. And, where correction is completed with respect to all sub-pixel data having the specified light-emitting pattern searched in Step 31, the process shifts to STEP 4 in Fig. 7 (STEP 33).

As described above, in the display apparatus according to the present embodiment, where sub-pixel data having a specified light-emitting pattern exist in the sub-pixel data obtained from the inputted binary image data, the correcting unit 7 corrects the light-emitting pattern so that the contrast becomes high.

With such a construction, where sub-pixel data having a specified light-emitting pattern exist if a pattern for lowering the contrast is established as the specified light-emitting pattern, the light-emitting pattern is corrected so that the contrast becomes high.

Resultantly, it is possible to prevent the contrast from being lowered due to a state of allocation of the light-emitting pattern to the sub-pixels, wherein a high-quality binary image display can be achieved.

In further detail, a specified light-emitting pattern (sub-pixel data 17 in Figs. 4(a) and (b)), which is searched by the correcting unit 7 is a pattern in which the sub-pixel of B among three primary colors of R, G and B emits light in isolation.

In this case, the correcting unit 7 corrects to a pattern in which any one of sub-pixels adjacent to both sides of the sub-pixel of B that emits light in isolation is cased to emit light, and the sub-pixel of B is not caused to emit light (sub-pixel data 19 in Fig. 4(a)).

By this construction, the sub-pixel of G or R, which has a greater degree of contribution to luminance, is caused to emit light with respect to the sub-pixel of B. As a result, it is possible to prevent the contrast from being lowered due to the presence of a pattern in which the sub-pixel of B having a lower degree of contribution to luminance emits light in isolation, wherein a high-quality binary image display can be achieved.

Also, in this case, the pattern may be corrected to a pattern in which any one of the sub-pixels adjacent to both sides of the sub-pixel of B that emits light in isolation is caused to emit light, and the sub-pixel of B is caused to emit light (sub-pixel data 18 in Fig. 4(b)).

With this construction, not only the sub-pixel of B but also the sub-pixel of G or R having a greater degree of contribution to the luminance than the sub-pixel of B is caused to emit light. As a result, a lowering in the contrast due to the presence of a pattern in which sub-pixel of B having a low degree of contribution to luminance emits light in isolation can be suppressed, wherein a high-quality binary display can be achieved.

Also, a specified light-emitting pattern that is searched by the correcting unit 7 is a pattern in which a set composed of sub-pixels of B and R adjacent to each other of the three primary colors R, G and B emits light in isolation in the first direction (sub-pixel data 20 in Fig. 4(c)).

In this case, the correcting unit 7 corrects to a pattern in which any one of the sub-pixels constituting the set is caused to emit light and the sub-pixel adjacent to the sub-pixel caused to emit light is caused to emit light (sub-pixel data 21 in Fig. 4(c)).

With this construction, no pattern resides, in which a set of the sub-pixels of BR having the lowest degree of contribution to luminance among the sets of sub-pixels of RG, BR and GB, emits light in isolation. Instead, a set of sub-pixels of RG or GB is caused to emit light.

As a result, it is possible to prevent the contrast from being lowered due to the presence of a pattern in which a set of sub-pixels of BR emits light in isolation, wherein a high-quality binary image display can be achieved.

Further, in the present embodiment, the row of sub-pixels (light-emitting elements of the display device 3) is in the order of R, G and B in the first direction. However, where the sub-pixels are arranged in the second direction, and where these are arranged in other rows such as B, G, and R, the present embodiment may be applicable as in the above, and an effect similar to that in the above description can be achieved.

In addition, when multiple-value image data are inputted into the sub-pixel data generating unit 6 and multiple-value sub-pixel data are generated, the correcting unit 7 corrects the light-emitting pattern so that the contrast becomes high where multiple-value sub-pixel data having a specified light-emitting pattern (See Fig.4) exist when the multiple-value sub-pixel data are judged on the basis (reference) of a threshold value defined in advance.

With this construction, even in a case where multiple-value image data are inputted, it is possible to confirm the presence of the specified light-emitting pattern and to correct the light-emitting pattern.

As a result, it is possible to prevent the contrast from being lowered due to any allocation of the light-emitting pattern of sub-pixels, wherein a high-quality multiple-value image display can be achieved.

### [Embodiment 2]

The entire configuration of a display apparatus according to a second embodiment of the invention is similar to that of the display apparatus shown in Fig. 1.

Fig. 9 is a block diagram of sub-pixel rendering process unit of the display apparatus according to the second embodiment of the invention. Also, parts that are the same as those of the sub-pixel rendering process unit 4 in Fig. 2 are given the same reference numbers.

As shown in Fig. 9, the sub-pixel rendering process unit 4 includes two-time magnifying unit 40, correcting unit 41, and filtering process unit 8.

Hereinafter, a description is given of actions of the respective components where it is assumed that display information inputted in the display information inputting unit 1 is binary image data.

The two-time magnifying unit 40 magnifies the inputted binary image data by two times and generates sub-pixel data. A further detailed description is given of this point.

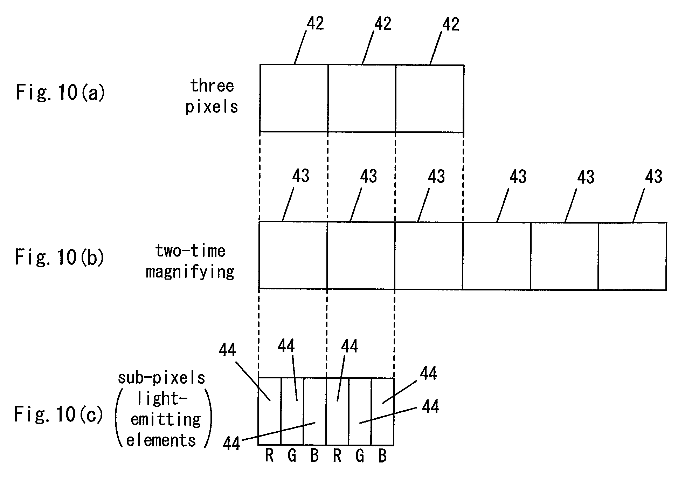

Figs. 10 are views describing a two-time magnifying process. In Figs. 10, the three pixels of the inputted binary image data are noted for convenience of explanation.

The two-time magnifying unit 40 magnifies the inputted data 42 (Fig. 10(a)) of three pixels in the first direction in order to obtain six sub-pixel data 43 (Fig. 10(b)). And, the six sub-pixel data 43 are allocated to six sub-pixels (light-emitting elements) 44 (Fig. 10(c)).

Therefore, as has been made clear through the comparison of Fig. 10(a) with Fig. 10(c), an image that is obtained by magnifying the inputted binary image by two-thirds in the first direction can be brought about.

Based on the above description, if the first direction is a horizontal direction and the image data are fonts, a longitudinally long font is depicted by carrying out a two-time magnifying process.

Thus, if a sub-pixel display is performed by carrying out two-time magnification in the horizontal direction, the number of characters (number of fonts) that can be displayed in the same width can be increased.

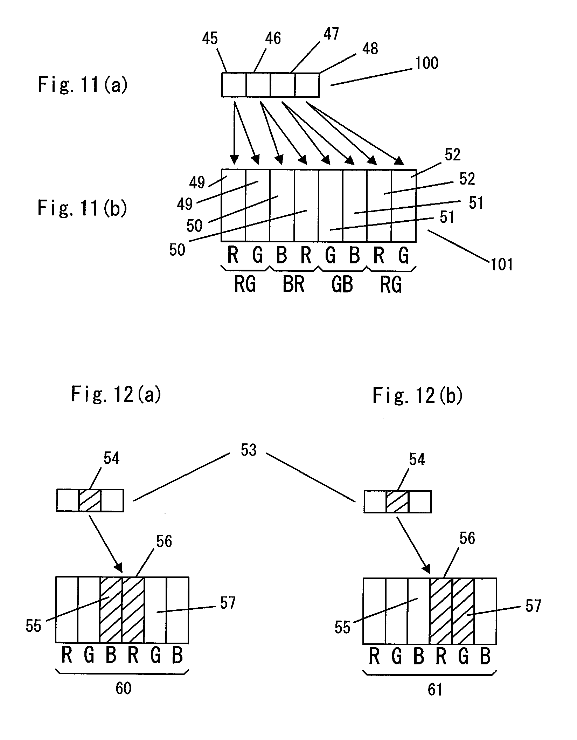

Figs. 11 are views describing a degree of contribution to luminance regarding sub-pixel data that are obtained by the two-time magnifying process.

Fig. 11(a) indicates one line in the first direction of binary image data 100 that are inputted in the two-time magnifying unit 40, and Fig. 11(b) indicates one line in the first direction of the sub-pixel data 101 that are generated by the two-time magnifying unit 40 on the basis of the binary image data 100.

Also, for convenience of description, Figs. 11 show a state where the binary image data 100 are allocated to pixels and a state where sub-pixel data 101 are allocated to sub-pixels. However, the relationship between sub-pixels and pixels actually becomes as shown in Figs. 10 (that is, to be magnified by two-thirds). However, a description differing therefrom is employed in Figs. 11 for convenience of description.

As shown in Figs. 11, in a case where data are magnified by the two-time magnifying process, data of one pixel 45 are allocated to sub-pixels 49 of R and G, data of one pixel 46 are allocated to sub-pixels 50 of B and R, data of one pixel 47 are allocated to sub-pixels 51 of G and B, and data of one pixel 48 are allocated to sub-pixels 52 of R and G.

That is, there exist three patterns of RG, BR and GB as patterns in which the inputted data of one pixel are allocated to sub-pixels.

By utilizing that the degree of contribution of R, G and B to luminance is R:G:B = 3:6:1, if the degrees of brightness are calculated with respect to the three patterns of RG, BR and GB, the degrees become RG:BR:GB = (3+6) : (1+3) : (6+1) = 9 : 4 : 7.

Therefore, the brightness of the pattern BR is lowest in comparison with the other two patterns.

Accordingly, the sub-pixel data obtained by the two-time magnifying unit 40 are given to the correcting unit 41, wherein the pattern in which a set of sub-pixels B and R emits light in isolation is corrected to suppress a lowering in the contrast.

Also, since the two-time magnifying process is carried out, no pattern (sub-pixel data 17 in Figs. 4(a) and (b)) is generated, in which the sub-pixel of B that has the lowest degree of contribution to luminance emits light in isolation, even in a case where no correcting process is performed by the correcting unit 41, wherein no pattern in which the contrast is remarkably low is generated.

Fig. 12 is a view describing a correcting process that is carried out by the correcting unit 41. Fig. 12(a) indicates binary image data 53 and sub-pixel data 60 for which the correcting process obtained therefrom is not carried out, and Fig. 12(b) indicates binary image data 53 and sub-pixel data 61 for which the correcting process obtained therefrom is performed.

And, in Fig. 12, for convenience of description, a state where the binary image data 53 are allocated to pixels, and a state where sub-pixel data 60 and 61 are allocated to sub-pixels are shown. However, although the relationship between sub-pixels and pixels actually becomes as shown in Figs. 10 (that is, to be magnified by two-thirds), a description differing therefrom is employed in Fig. 12 for convenience of description. Also, in Fig. 12, sections shown by diagonal lines express pixels and sub-pixels that are emitting light.

Herein, the sub-pixel data 60 for which no correcting process shown in Fig. 12(a) is carried out can be considered to be sub-pixel data before being inputted into the correcting unit 41. Based on this thought, a description is given of rules of a correcting process by the correcting unit 41. Also, since image data that are inputted into the two-time magnifying unit 40 are binary image data, for simplification, a case where the sub-pixels are caused to emit light is expressed to be [ON], and a state where no sub-pixels are caused to emit light is expressed to be [OFF].

Also, where it is assumed that a row of sub-pixels in the display device 3 is in order of R, G and B, combinations of colors and light-emitting states of sub-pixels are expressed to be R(ON), R(OFF), G(ON), G(OFF), B(ON), and B(OFF).

As shown in Fig. 12(a), a row of sub-pixels in sub-pixel data 60 obtained from the binary image data 53 in which only the center pixel 54 emits light in isolation is R(OFF), G(OFF), B(ON), R(ON), G(OFF), and B(OFF), wherein, if the pattern is a specified light-emitting pattern (light-emitting pattern defined in advance) in which a set of B and R emits light in isolation, the correcting unit 41 carries out a correcting process so that the contrast becomes high, as shown in Fig. 12(b).

In detail, the correcting unit 41 corrects the sub-pixel data 60 having the specified light-emitting pattern so that the sub-pixel 55 of B emitting light is turned [OFF], and sub-pixels 56 and 57 of R and G are turned [ON], and the same correcting unit 41 generates sub-pixel data 61 in which the row of the sub-pixels becomes R(OFF), G(OFF), B(OFF), R(ON), G(ON), and B(OFF).

Also, in addition to such correction, the light-emitting pattern of R(OFF), G(OFF), B(ON), R(ON), G(OFF), and B(OFF) may be corrected to a light-emitting pattern of R(OFF), G(ON), B(ON), R(OFF), G(OFF), and B(OFF).

Thus, by carrying out a correcting process in a case where a specified light-emitting pattern in which a set of B and R emits light in isolation exists, the output of the correcting unit 41 results in removing any pattern in which a set of B and R emits light in isolation, wherein sets which emit light in isolation become two sets of RG and GB.

Therefore, when correction is made to cause RG to emit light instead of BR, the comparison in the degree of contribution to luminance becomes RG : BR (RRG) : GB = 9 : 9 : 7. Also, when correction is made to cause GB to emit light instead of BR, the comparison in the degree of contribution to luminance becomes RG : BR (RGB) : GB = 9 : 7 : 7.

As a result, it is possible to make the entire contrast uniform, and almost simultaneously, it is possible to prevent a lowering in the contrast by a specified light-emitting pattern in which a set of BR emits light in isolation, bringing about a clear display.

On the other hand, where no correcting process is carried out, the row of sub-pixels becomes R(OFF), G(OFF), B(ON), R(ON), G(OFF), and B(OFF), a pattern in which a set of B and R emits light in isolation is maintained.

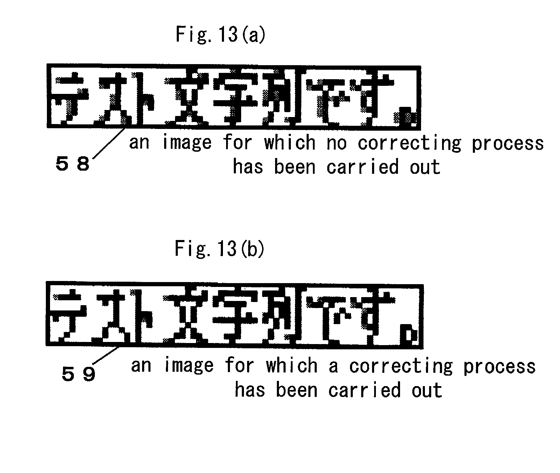

Figs. 13 are views of an image for which no correcting process is carried out, and an image for which a correcting process is carried out.

Fig. 13(a) indicates an image 58 for which no correcting process has been carried out, and Fig. 13(b) indicates an image 59 for which a correcting process has been carried out. In comparing both of these with each other, it can be found that the contrast with respect to lines in the longitudinal direction has been improved.

Based on the above description, a description is given of a flow of processing in a display apparatus according to the second embodiment of the invention with reference to the drawing.

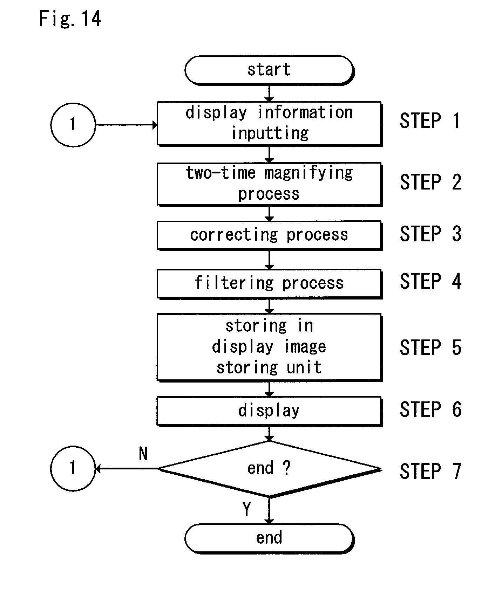

Fig. 14 is a flow chart of a display apparatus according to the second embodiment of the invention. As shown in Fig. 14, first, in STEP 1, display information is inputted in the display information inputting unit 1. As described above, the inputted display information is binary image data.

Next, in STEP 2, the binary image data are given to the two-time magnifying unit 40 and are magnified by two times in the first direction, wherein sub-pixel data are generated.

Next, in STEP 3, the correcting unit 41 carries out a correcting process with respect to sub-pixel data that are inputted from the two-time magnifying unit 40.

A process from STEP 4 through STEP 7 corresponds to the process from STEP 4 through STEP 7 in Fig. 7.

Next, using Fig. 12 and the flow chart shown in Fig. 14, a description is given of a flow of a two-time magnifying process in STEP 2 of Fig. 14 and a correcting process in STEP 3 therein.

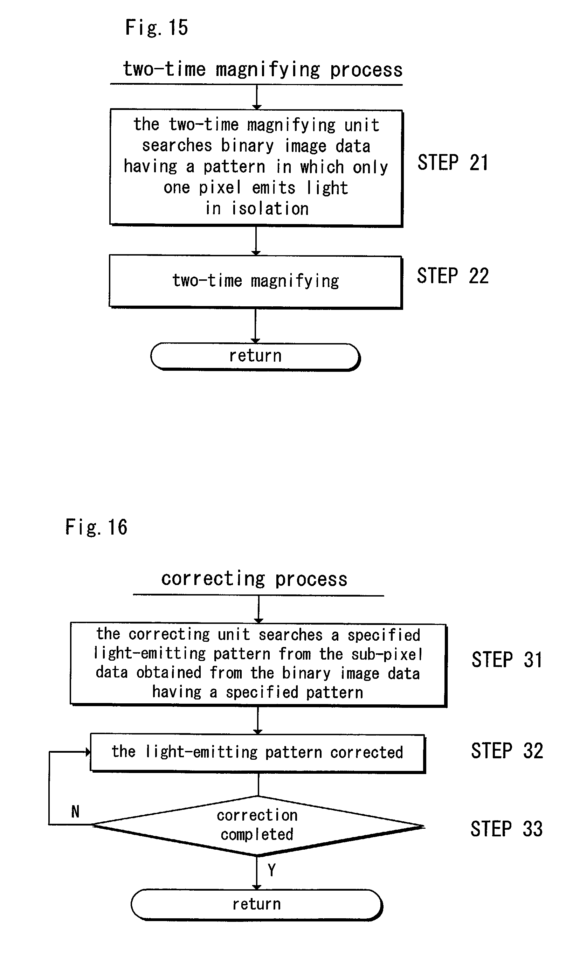

Fig. 15 is a flow chart of a two-time magnifying process in STEP 2 in Fig. 14, and FIG. 16 is a flow chart of a correcting process in STEP 3 in Fig. 14.

As shown in FIG. 15, in STEP 21, the two-time magnifying unit 40 searches binary image data having a pattern, in which only one pixel emits light in isolation, from the inputted binary image data.

In detail, as shown in Fig. 12, with respect to the inputted binary image data, the binary image data 53 having a pattern in which only one pixel 54 positioned at the center among three pixels adjacent to each other in the first direction emits light is searched.

And, in STEP 22, the two-time magnifying unit 40 magnifies the inputted binary image data by two times in the first direction, and generates sub-pixel data. Also, sub-pixel data are generated for not only the binary image data searched in STEP 21 but also all binary image data.

Further, as shown in Fig. 16, in STEP 31, the correcting unit 41 searches sub-pixel data (sub-pixel data 60 in Fig. 12(a)) having a pattern, in which a set of sub-pixels of B and R emits light in isolation, from the sub-pixel data obtained from the binary image data (binary image data 53 in Fig. 12) searched by the two-time magnifying unit 40 and having a pattern in which only one pixel emits light in isolation.

Also, although a pattern in which a set of sub-pixels of R and G emits light in isolation, and a pattern in which a set of sub-pixels of G and B emits light in isolation can exist in the sub-pixel data that are obtained from the binary image data (binary image data 53 in Fig. 12), searched by the two-time magnifying unit 40, in which only one pixel emits light in isolation, these light-emitting patterns are not searched in STEP 31.

And, in STEP 32, the correcting unit 41 carries out a correcting process with respect to the sub-pixel data (sub-pixel data 60 in Fig. 12(a)) having a specified light-emitting pattern searched, so that the contrast becomes high, and the corrected sub-pixel data are made into new sub-pixel data (sub-pixel data 61 in Fig. 12(b)). In this case, the correcting process is subjected to the rules of the correcting process described in Fig. 12.

Where correction is terminated with all sub-pixel data having a specified light-emitting pattern searched in STEP 32, the process shifts to STEP 4 in FIG. 14 (STEP 33).

As described above, in the present embodiment, the two-time magnifying unit 40 magnifies the inputted binary image data by two times in the first direction to generate sub-pixel data.

With this construction, an image that is reduced to two-thirds in comparison with the binary image inputted into the two-time magnifying unit 40 can be displayed on a display device 3. As a result, it is possible to increase the number of characters that can be displayed on a display device 3 of the same size.

In addition, when data of one pixel in the binary image data inputted into the two-time magnifying unit 40 are displayed on the display device 3, the data are allocated to two light-emitting elements (sub-pixels). Resultantly, no light-emitting pattern in which the contrast is remarkably low is generated.

Also, where sub-pixel data having a specified light-emitting pattern exist in the sub-pixel data, the correcting unit 41 corrects the light-emitting pattern so that the contrast becomes high.

With this construction, where sub-pixel data having a specified light-emitting pattern exist, the light-emitting pattern can be corrected so that the contrast becomes high, by setting a pattern to lower the contrast as the specified light-emitting pattern.

As a result, it is possible to prevent the contrast from being lowered due to any allocation of a light-emitting pattern to sub-pixels, wherein a high-quality binary image display can be achieved.

In further detail, the specified light-emitting pattern that is searched by the correcting unit 41 is a pattern in which a set composed of sub-pixels of B and R adjacent to each other of the three primary colors of R, G and B emits light in isolation in the first direction (sub-pixel data 60 in Fig. 12(a)).

The correcting unit 41 causes any one (for example, sub-pixel 56 in Fig. 12 (b)) of sub-pixels (sub-pixels 55 and 56 in Fig. 12(a)) which constitute the set of BR to emit light, and corrects the pattern to a pattern in which the sub-pixel (sub-pixel 57 in Fig. 12(b) )adjacent to the sub-pixel caused to emit light is caused to emit light (sub-pixel data 61 in Fig. 12(b)).

With this construction, no pattern exists, in which a set of sub-pixels BR having the lowest degree of contribution to luminance emits light in isolation, of sets of sub-pixels RG, BR and GB. Instead, a set of sub-pixels RG or GB emits light.

As a result, it is possible to prevent the contrast from being lowered due to the presence of a pattern in which a set of sub-pixels BR emits light in isolation, wherein a high-quality binary image display can be achieved.

Summarizing the above description, in the present embodiment, by displaying a result obtained by magnifying a font by a two-time magnifying process in terms of sub-pixels, it is possible to reduce the width of characters and display more characters in the first direction, using a longitudinally long font, without spoiling the quality. Also, the contrast becomes high by the correcting process, whereby it is possible to achieve a binary image display with greater visibility.

Further, in the embodiment, the correcting unit 41 does not search sub-pixel data having a specified light-emitting pattern from all sub-pixel data inputted from the two-time magnifying unit 40, but searches sub-pixel data (sub-pixel data 60 in Fig. 12(a)) having a specified light-emitting pattern from the sub-pixel data obtained from the binary image data (binary image data 53 in Fig. 12) searched by the two-time magnifying unit 40 and having a specified light-emitting pattern in which one pixel emits light in isolation.

Resultantly, the time required to search a specified light-emitting pattern can be shortened in the correcting unit 41.

Also, the row of sub-pixels (light-emitting elements of the display device 3) is in the order of R, G and B in the first direction in the present embodiment. However, where the sub-pixels are arranged in the second direction, and where these are arranged in other orders such as B, G, and R, the present embodiment may be applicable as in the above, and an effect similar to that in the above description can be achieved.

### [Embodiment 3]

A display apparatus according to a third embodiment is such that a feature of the display apparatus according to the first embodiment targeting binary image data is devised to be applicable to multiple-value image (grayscale) data.

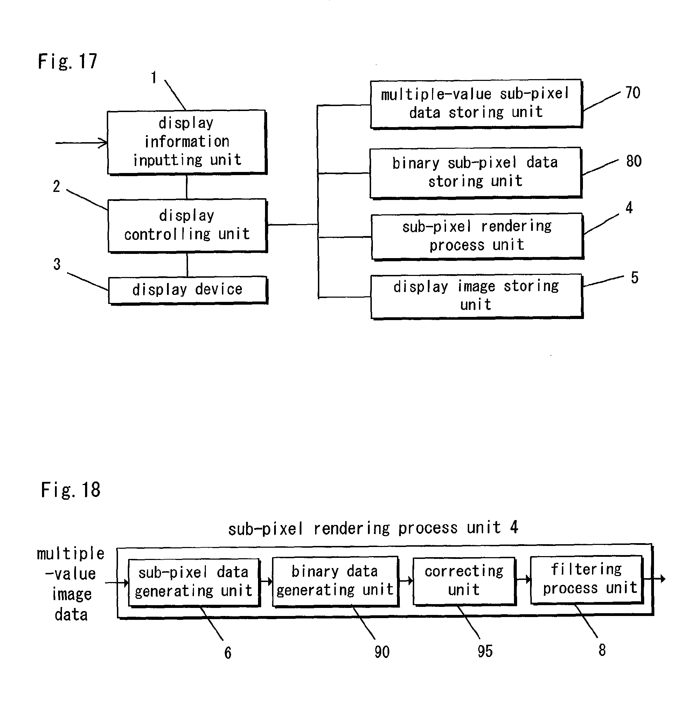

Fig. 17 is a block diagram of a display apparatus according to the third embodiment of the invention. Also, in Fig. 17, parts that are similar to those in Fig. 1 are given the same reference numbers, and overlapping description is appropriately omitted.

As shown in Fig. 17, the display apparatus includes display information inputting unit 1, display controlling unit 2, a display device 3, sub-pixel rendering process unit 4, display image storing unit 5, multiple-value sub-pixel data storing unit 70 and binary sub-pixel data storing unit 80.

The multiple-value sub-pixel data storing unit 70 stores multiple-value sub-pixel data. The binary sub-pixel data storing unit 80 stores binary sub-pixel data.

Fig. 18 is a block diagram of the sub-pixel rendering process unit 4 in Fig. 17. Also, in Fig. 18, parts that are similar to those in Fig. 2 are given the same reference numbers, and overlapping description is appropriately omitted.

As shown in Fig. 18, the sub-pixel rendering process unit 4 includes sub-pixel data generating unit 6, binary data generating unit 90, correcting unit 95 and filtering process unit 8.

The sub-pixel data generating unit 6 generates multiple-value sub-pixel data on the basis of the inputted multiple-value image data. A process in this case is similar to that in the case where binary image data are inputted, wherein multiple-value sub-pixel data are obtained by magnifying the inputted binary multiple-value image data by 3 times, 3/2 times, 2 times, etc., at a magnification ratio that is optionally established. The multiple-value sub-pixel data thus obtained are stored in the multiple-value sub-pixel data storing unit 70.

The binary data generating unit 90 converts multiple-value sub-pixel data, which are inputted from the sub-pixel data generating unit 6, to binary sub-pixel data. The binary sub-pixel data thus obtained are stored in the binary sub-pixel data storing unit 80. Also, the correcting unit 95 corrects multiple-value sub-pixel data, which are stored in the multiple-value sub-pixel data storing unit 70, so that the contrast thereof becomes high. This point will be described in further detail in a flow of processing made by a display apparatus according to the present embodiment.

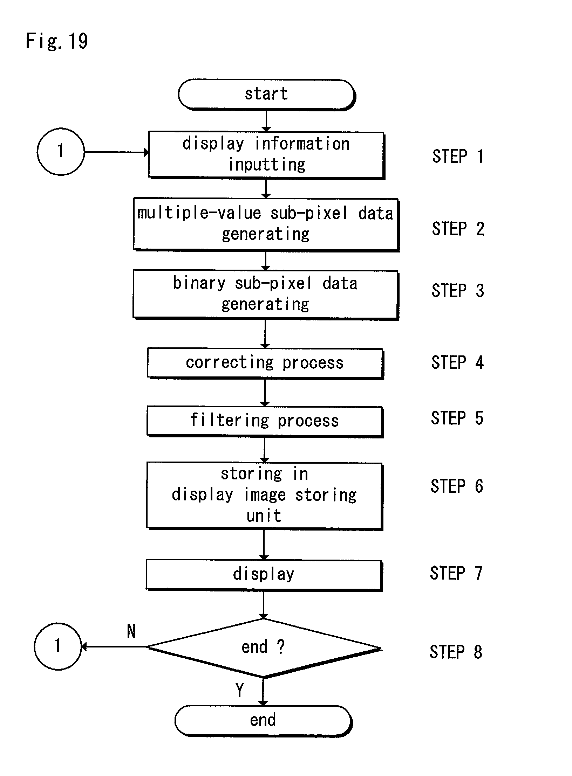

Fig. 19 is a flow chart of a display apparatus according to the present embodiment. As shown in Fig. 19, first, in STEP 1, display information is inputted in the display information inputting unit 1. As described above, display information to be inputted is multiple-value image data.

Next, in STEP 2, the sub-pixel data generating unit 6 generates multiple-value sub-pixel data on the basis of the inputted multiple-value image data. A detailed process is similar to that in the first embodiment. For example, where an image having the same magnification as that of the inputted multiple-value image is displayed on a display device 3, the multiple-value image data are magnified by three times in the first direction to generate multiple-value sub-pixel data.

And, the sub-pixel data generating unit 6 returns the generated multiple-value sub-pixel data to the display controlling unit 2, and the display controlling unit 2 stores the received multiple-value sub-pixel data in the multiple-value sub-pixel data storing unit 70.

Next, in STEP 3, the multiple-value sub-pixel data are provided into the binary data generating unit 90, wherein binary sub-pixel data are generated.

In detail, on the basis of the threshold value defined in advance, the binary data generating unit 90 determines a state where light is emitted or a state where no light is emitted, with respect to the inputted multiple-value sub-pixel data, thereby generating binary sub-pixel data.

In further detail, the binary data generating unit 90 compares multiple-value sub-pixel data, which are allocated to one sub-pixel, with the threshold value defined in advance. If the multiple-value sub-pixel data are greater than the threshold value defined in advance, the multiple-value sub-pixel data is turned into a state where light is emitted, and if the multiple-value sub-pixel data are smaller than the threshold value defined in advance, the multiple-value sub-pixel data are turned into a state where no light is emitted, whereby binary sub-pixel data are generated, corresponding to the multiple-value sub-pixel data.

That is, in a case of generating binary sub-pixel data, the binary data generating unit 90 determines a state where light is emitted or a state where no light is emitted, on the basis of a magnitude in the case where the multiple-value sub-pixel data corresponding to one sub-pixel are compared with the threshold value defined in advance, and binary sub-pixel data corresponding to the multiple-value sub-pixel data are generated.

By such a method, the binary data generating unit 90 determines a state where light is emitted or a state where no light is emitted, with respect to all inputted multiple-value sub-pixel data, and generates binary sub-pixel data. As described above, it is possible to simply generate the binary sub-pixel data.

And, the binary data generating unit 90 returns the generated binary sub-pixel data to the display controlling unit 2, and the display controlling unit 2 stores the received binary sub-pixel data in the binary sub-pixel data storing unit 80.

Next, in STEP 4, the correcting unit 95 carries out a correcting process for the multiple-value sub-pixel data stored in the multiple-value sub-pixel data storing unit 70 with reference to the binary sub-pixel data that are stored in the binary sub-pixel data storing unit 80.

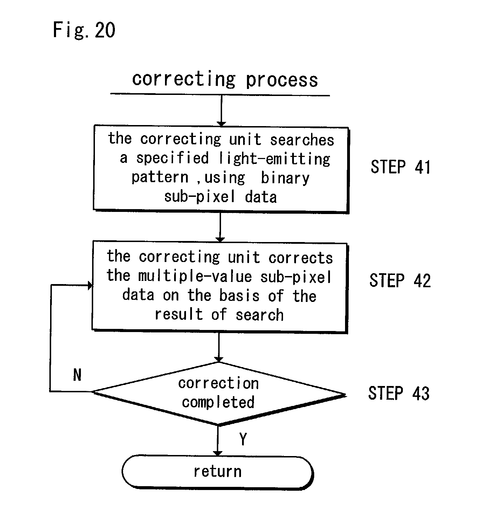

Fig. 20 is a flow chart of a correcting process in STEP 4 in Fig. 19. As shown in Fig. 20, in STEP 41, the correcting unit 95 searches a specified light-emitting pattern, using binary sub-pixel data.

A specified light-emitting pattern that is searched at this time is similar to that in the first embodiment, and is a pattern in which sub-pixel of B emits light in isolation and a pattern in which a set of sub-pixels of BR emits light in isolation.

Herein, a description is given of an example, that is search of a specified light-emitting pattern in a case where multiple-value image data are magnified by two times, and multiple-value sub-pixel data and binary sub-pixel data are generated.

In this example, a specified light-emitting pattern is searched by using binary sub-pixel data, which are generated on the basis of multiple-value image data of one pixel, as a unit. This point is described, using the drawings.

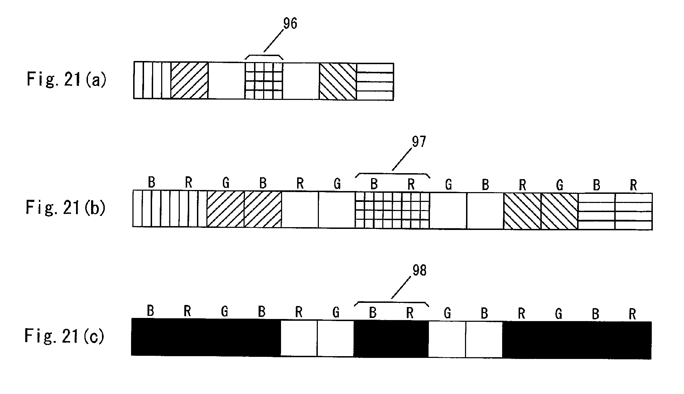

Figs. 21 are views describing a retrieving process of a specified light-emitting pattern in the binary sub-pixel data obtained by magnifying the multiple-value sub-pixel data by two times.

Fig. 21(a) is a view exemplifying multiple-value image data inputted into the sub-pixel data generating unit 6. Fig. 21(b) is a view exemplifying the multiple-value sub-pixel data that are generated by magnifying the multiple-value image data in Fig. 21(a) by two times in the first direction. Fig. 21(c) is a view exemplifying the binary sub-pixel data that are generated on the basis of the multiple-value sub-pixel data in Fig. 21(b).

Also, in Figs. 21, multiple-value image data or sub-pixel data are illustrated by sectioning the same pixel-by-pixel or sub-pixel-by-sub-pixel. Also, it is indicated that the multiple-value sub-pixel data in Fig. 21(b), which are of the same type as the multiple-value image data in Fig. 21(a) and hatched therein, are generated from the multiple-value image data.

As shown in Figs. 21(a) and (b), multiple-value sub-pixel data 97 that are allocated to two sub-pixels are generated from the multiple-value 96 of one pixel. And, as shown in Figs. 21(b) and (c), binary sub-pixel data 98 are generated on the basis of the multiple-value sub-pixel data 97 that are allocated to two sub-pixels.

The binary sub-pixel data 98 (corresponding to the multiple-value image data of one pixel) that are thus generated are used as one unit, whereby a specified light-emitting pattern (a pattern in which a set of sub-pixels of BR emits light in isolation) is searched.

Thereby, as shown in Fig. 21(c), it can be searched that binary sub-pixel data 98 being one unit of search emit light in isolation.

Now, the description returns to Fig. 20. In STEP 42 next to STEP 41, the correcting unit 95 corrects the multiple-value sub-pixel data on the basis of the result of search in STEP 41, so that the contrast becomes high. This point is described, including a process in STEP 41, using a detailed example.

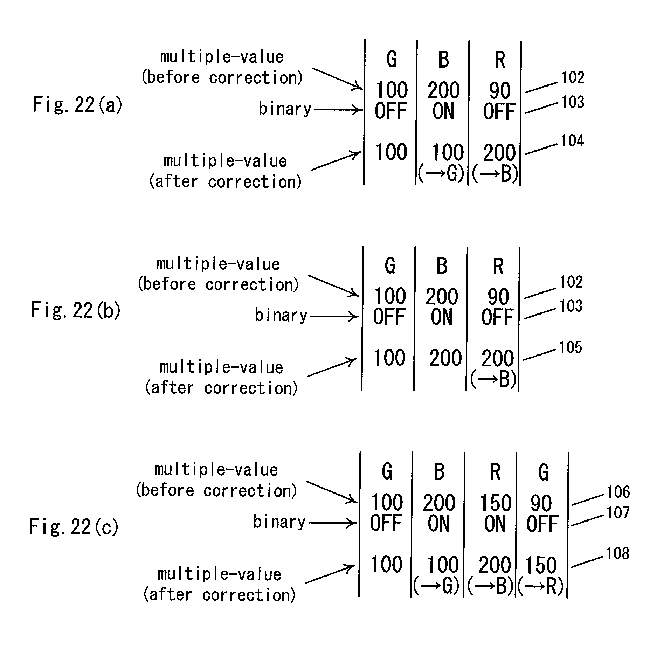

Fig. 22 is a conceptual view showing a state where sub-pixel data are allocated to sub-pixels, and the drawing is used to describe the rules of a correcting process in the correcting unit 95.

A row of sub-pixels (light-emitting elements) in the display device 3 is in order of R, G and B. Fig. 22 shows sub-pixels that are arranged in order of G, B, and R. Also, in respective Figs. 22(a), (b) and (c), multiple-value sub-pixel data before the correction, binary sub-pixel data, and multiple-value sub-pixel data after the correction are shown.

Also, in the binary sub-pixel data, for simplification, sub-pixel data in a case where the sub-pixels (light-emitting elements) are caused to emit light is expressed as [ON], and sub-pixel data in a case where the sub-pixels (light-emitting elements) are not caused to emit light is expressed as [OFF].

And, in the following description, in the case of binary sub-pixel data, combinations of colors and light-emitting states of sub-pixels (light-emitting elements) are expressed to be R(ON), R(OFF), G(ON), G(OFF), B(ON), and B(OFF).

Here, in Fig. 22(a), the sub-pixel data 102 before correction are in order of G, B and R and are denoted by [100], [200] and [90], respectively. And, it is assumed that binary sub-pixel data 103 are generated on the basis of the sub-pixel data 102 before the correction, using the threshold value defined in advance as a reference, and the threshold value defined in advance at this time is [128].

As shown in Fig. 22(a), the correcting unit 95 searches binary sub-pixel data 103, having a specified light-emitting pattern (a light-emitting pattern defined in advance) in which a sub-pixel of B (Blue) emits light in isolation, in which a row of the sub-pixels is G (OFF), B (ON), and R (OFF) (STEP 41 in Fig. 20).

And, taking note of data B [200] which will emit light in isolation where the binary sub-pixel data 103 of the multiple-value sub-pixel data 102 are employed, the correcting unit 95 corrects the data B [200] to the data G [100] adjacent to one side thereof, and corrects the data R [90] adjacent to the other side thereof to the data B [200], and at the same time, the data G [100] adjacent to one side thereof remains as it is, and the multiple-value sub-pixel data 102 are made into new multiple-value sub-pixel data 104 (STEP 42 in Fig.20).

That is, it can be said that the correcting unit 95 judges the multiple-value sub-pixel data on the basis of the threshold value defined in advance and searches multiple-value sub-pixel data 103 having a pattern in which a sub-pixel of B emits light in isolation, wherein multiple-value sub-pixel data 104 for which the light-emitting pattern is corrected so that the contrast becomes high are obtained.

Further, as shown in Fig. 22 (b), taking note of data B [200] which will emit light in isolation where the binary sub-pixel data 103 of the multiple-value sub-pixel data 102 are employed, the correcting unit 95 renders the data B [200] and data G [100] adjacent to one side thereof to remain as they are, and the same correcting unit 95 corrects the data R [90] adjacent to the other end thereof to the data B [200], wherein the multiple-value sub-pixel data 102 can be made into new multiple-value sub-pixel data 105 (STEP 42 in Fig. 20).

That is, it can be said that the correcting unit 95 judges the multiple-value sub-pixel data on the basis of the threshold value defined in advance and searches multiple-value sub-pixel data 103 having a pattern in which a sub-pixel of B emits light in isolation, wherein multiple-value sub-pixel data 105 for which the light-emitting pattern is corrected so that the contrast becomes high are obtained.

In Fig. 22(c), the sub-pixel data 106 before correction are in order of G, B, R and G in the first direction, which are denoted as [100], [200], [150] and [90], respectively. And, it is assumed that binary sub-pixel data 107 are generated on the basis of the sub-pixel data 106 before the correction with reference to the threshold value defined in advance. Also, in this case, the threshold value defined in advance is assumed to be [128].

As shown in Fig. 22(c), the correcting unit 95 searches binary sub-pixel data 107, in which a row of sub-pixels is G (OFF), B (ON), R (ON), G (OFF), having a specified light-emitting pattern in which a set of sub-pixels B (Blue) and R (Red) emits light in isolation (STEP 41 in Fig. 20).

And, taking note of data BR [200] and [150] which will emit light in isolation where the binary sub-pixel data 107 of the multiple-value sub-pixel data 106 are employed, the correcting unit 95 corrects the data B [200] of BR to [100] that is data G adjacent thereto, the data R [150] of BR to data B [200] of BR, and the data G [90] adjacent to the data R [150] of BR to the data R [150] of BR, and at the same time, the correcting unit 95 causes the data G [100] adjacent to the data B [200] of BR to remain as it is, wherein the multiple-value sub-pixel data 106 are made into new multiple-value sub-pixel data 108 (STEP 42 in Fig. 20).

That is, it can be said that the correcting unit 95 judges the multiple-value sub-pixel data on the basis of the threshold value defined in advance and searches the multiple-value sub-pixel data 106 having a light-emitting pattern in which a set of sub-pixels B and R emits light in isolation, wherein multiple-value sub-pixel data 108 for which a light-emitting pattern is corrected so that the contrast becomes high are obtained.

Rules for the correcting process shown below may be used in addition to the rules of the correcting process, which are shown in Fig. 22.

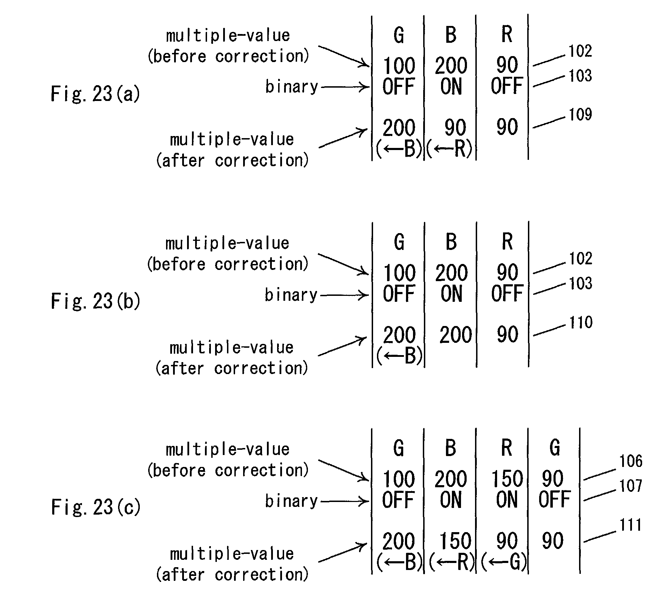

Fig. 23 is a view showing another example of rules of the correcting process in the correcting unit 95. Also, in Fig. 23, parts that are similar to those in Fig. 22 are given the same reference numbers, and description thereof is omitted.

As shown in Fig. 23(a), the correcting unit 95 searches binary sub-pixel data 103, in which a row of sub-pixels is G (OFF), B (ON), and R (OFF), having a specified light-emitting pattern (light-emitting pattern defined in advance) in which a sub-pixel of B (Blue) emits light in isolation. (STEP 41 in Fig. 20).

And, taking note of data B [200] which will emit light in isolation where the binary sub-pixel data 103 of the multiple-value sub-pixel data 102 are employed, the correcting unit 95 corrects the data B [200] to the data R [90] adjacent to one side thereof, and corrects the data G [100] adjacent to the other side thereof to the data B [200], and at the same time, causes the data R [90] adjacent to one side thereof to remain as it is, and the multiple-value sub-pixel data 102 are made into new multiple-value sub-pixel data 109 (STEP 42 in Fig.20).

Also, as shown in Fig. 23(b), taking note of data B [200] which will emit light in isolation where the binary sub-pixel data 103 of the multiple-value sub-pixel data 102 are employed, the data B [200] and data R [90] adjacent to one side thereof are caused to remain as they are, and the data G [100] adjacent to the other side thereof is corrected to the data B [200], wherein the multiple-value sub-pixel data 102 may be made into new multiple-value sub-pixel data 110 (Step 42 in Fig. 20).

Also, on the other hand, as shown in Fig. 23(c), the correcting unit 95 searches binary sub-pixel data 107, in which a row of sub-pixels is G (OFF), B (ON), R (ON) and G (OFF), having a specified light-emitting pattern in which a set of sub-pixels B (Blue) and R (Red) emits light in isolation (STEP 41 in Fig. 20).

And, taking note of data BR [200] and [150] which will emit light in isolation where the binary sub-pixel data 107 of the multiple-value sub-pixel data 106 are employed, the correcting unit 95 corrects the data R [150] of BR to the data G [90] adjacent thereto, the data B [200] of BR to the data R [150] of BR, and the data G [100] adjacent to the data B [200] of BR to the data B [200] of BR, and the correcting unit 95 causes the data G [90] adjacent to the data R [150] of BR to remain as it is, wherein the multiple-value sub-pixel data 106 are made into new multiple-value sub-pixel data 111 (STEP 42 in Fig. 20).

As described above, where the display device 3 performs a multiple-value image display after the correction as shown in Fig. 22(a) or Fig. 23(a), light emission of the sub-pixel of B, which intensively emits more light than the sub-pixels of G and R adjacent thereto, is weakened. Instead, the sub-pixel G or R having a higher degree of contribution to luminance than the sub-pixel of B intensively emits light.

As a result, it is possible to prevent the contrast from being lowered due to a cause where only the sub-pixel of B having a lower degree of contribution to luminance intensively emits more light than the sub-pixels G and R adjacent thereto, wherein a high-quality multiple-value image display can be achieved.

Also, where the display device 3 performs a multiple-value image display after the correction as shown in Fig. 22(b) or Fig. 23(b), not only does the sub-pixel of B having a low degree of contribution to luminance intensively emit light, but also the sub-pixel of G or R having a higher degree of contribution to luminance than that of the sub-pixel of B also intensively emits light.

As a result, it is possible to prevent the contrast from being lowered due to a cause where only the sub-pixel of B having a lower degree of contribution to luminance intensively emits more light than the sub-pixels G and R adjacent thereto, wherein a high-quality multiple-value image display can be achieved.

Also, where the display device 3 performs a multiple-value image display after the correction as shown in Fig. 22(c) or Fig. 23(c), light emission of the set of sub-pixels BR having the lowest degree of contribution to luminance among the sub-pixels of RG, BR and GB is weakened. Instead, the set of sub-pixels of RG or GB intensively emits more light.

As a result, it is possible to prevent the contrast from being lowered due to a cause where the set of sub-pixels of BR intensively emits more light than in the sub-pixels adjacent thereto, wherein a high-quality multiple-value image display can be achieved.

The description returns to Fig. 19. In STEP 5, the filtering process unit 8 filters multiple-value sub-pixel data for which a correcting process has been carried out. A detailed filtering process is similar to that in the first embodiment.

In STEP 6, the display controlling unit 2 stores multiple-value sub-pixel data, for which a filtering process has been carried out, in the display image storing unit 5.

In STEP 7, the display controlling unit 2 allocates multiple-value sub-pixel data, which are stored in the display image storing unit 5, to three light-emitting elements, constituting one pixel, of the display device 3, and makes the display device 3 perform display.

And, the display controlling unit 2 returns the process to STEP 1 unless the display is terminated (in STEP 8).

As described above, in the present embodiment, the binary data generating unit 90 determines a state where light is emitted or a state where no light is emitted, on the basis of the threshold value defined in advance with respect to the multiple-value sub-pixel data, wherein binary sub-pixel data are generated (STEP 3 in Fig. 19).

Next, the correcting unit 95 searches binary sub-pixel data having a specified light-emitting pattern from binary sub-pixel data (STEP 41 in Fig. 20).

Next, where binary sub-pixel data having a specified light-emitting pattern is searched, the correcting unit 95 corrects a light-emitting pattern of the multiple-value sub-pixel data corresponding to the searched binary sub-pixel data, so that the contrast becomes high. (STEP 42 in Fig. 20).

With this construction, by setting a specified light-emitting pattern to a pattern by which contrast is lowered, if there exist binary sub-pixel data having the specified light-emitting pattern, the light-emitting pattern of the corresponding multiple-value sub-pixel data is corrected so that the contrast becomes high. (Refer to Fig. 22 and Fig.23).

As a result, it is possible to prevent the contrast from being lowered due to any allocation of a light-emitting pattern to sub-pixels, wherein a high-quality multiple-value image display can be achieved.

Also, where both of a difference between the noted multiple-value sub-pixel data and multiple-value sub-pixel data adjacent to one side (left side) thereof, and a difference between the noted multiple-value sub-pixel data and multiple-value sub-pixel data adjacent to the other side (right side) thereof are greater than the threshold value defined in advance, it is judged that the noted multiple-value sub-pixel data emit light in isolation, wherein correction may be carried out with respect to the multiple-value sub-pixel data in compliance with the rules shown in Fig. 22 or Fig. 23, so that the contrast becomes high.

Herein, a display apparatus according to the first embodiment through the third embodiment may be constituted as a portable terminal such as, for example, a cellular telephone, PDA (Personal Digital Assistants), etc.

Also, a process made by a display apparatus according to the first embodiment through the third embodiment may be executed in, for example, an LSI (Large-Scale Integrated Circuit) for depiction.

Further, a displaying method in a display apparatus according to the first embodiment through the third embodiment may be mounted in a personal computer in which, for example, an OS (operating system) is pre-installed.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A display method which performs display with a display device(3), with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen, comprising the steps of:
correcting a light-emitting pattern so that the contrast becomes high where sub-pixel data having a light-emitting pattern defined in advance exist in sub-pixel data obtained from data of an image to be displayed; and
allocating sub-pixel data to the light-emitting elements corresponding thereto after the correcting step and performing display with the display device(3).

2. The display method as set forth in Claim 1, wherein said image data to be displayed are binary image data.

3. The display method as set forth in Claim 1, wherein, in said correcting step, when said sub-pixel data obtained from the image data to be displayed are judged on the basis of a threshold value defined in advance, a light-emitting pattern is corrected so that contrast becomes high when there exist sub-pixel data having a light-emitting pattern defined in advance.

4. The display as set forth in Claim 1, wherein in said correcting step, the light-emitting pattern defined in advance is a pattern in which a sub-pixel of B of the three primary colors R, G and B emits light in isolation in said first direction;
in said correcting step, said pattern is corrected to a pattern in which any one of the sub-pixels adjacent to both sides of the sub-pixel of B that emits light in isolation is caused to emit light, and the sub-pixel of B is not caused to emit light.

5. The display method as set forth in Claim 1, wherein in said correcting step, the light-emitting pattern defined in advance is a pattern in which a sub-pixel of B of the three primary colors R, G and B emits light in isolation in said first direction;
in said correcting step, said pattern is corrected to a pattern in which any one of the sub-pixels adjacent to both sides of the sub-pixel of B that emits light in isolation is caused to emit light, and the sub-pixel of B is caused to emit light.

6. The display method as set forth in Claim 1, wherein in said correcting step, the light-emitting pattern defined in advance is a pattern in which a set composed of sub-pixels of B and R adjacent to each other of the three primary colors R, G and B emits light in isolation in said first direction;
in said correcting step, said pattern is corrected to a pattern in which any one of the sub-pixels constituting said set is caused to emit light, and sub-pixel adjacent to the sub-pixel caused to emit light is caused to emit light.

7. A display method which performs display with a display device(3), with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen, comprising the steps of:
magnifying data of an image to be displayed by two times in the first direction to generate sub-pixel data; and
allocating sub-pixel data to the light-emitting elements corresponding thereto and performing display with the display device(3).

8. The display method as set forth in Claim 7, further comprising the step of correcting a light-emitting pattern so that contrast becomes high where sub-pixel data having a light-emitting pattern defined in advance exist in said sub-pixel data;
wherein said displaying step is carried out after said correcting step.

9. The display method as set forth in Claim 8, wherein said image data to be displayed are binary image data.

10. The display method as set forth in Claim 8, wherein in said correcting step, when said sub-pixel data obtained from the image data to be displayed are judged on the basis of a threshold value defined in advance, a light-emitting pattern is corrected so that contrast becomes high when there exist sub-pixel data having a light-emitting pattern defined in advance.

11. The display method as set forth in Claim 8, wherein in said correcting step, the light-emitting pattern defined in advance is a pattern in which a set composed of sub-pixels of B and R adjacent to each other of the three primary colors R, G and B emits light in isolation in said first direction;
in said correcting step, said pattern is corrected to a pattern in which any one of the sub-pixels constituting said set is caused to emit light, and sub-pixel adjacent to the sub-pixel caused to emit light is caused to emit light.

12. A display method which performs display with a display device(3), with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen, comprising:
a first step of searching data of an image having a pattern in which only one pixel positioned at the center emits light, from three pixels adjacent to each other in the first direction among images to be displayed;
a step of generating sub-pixel data by magnifying the data of an image to be displayed, by two times in the first direction;
a second step of searching sub-pixel data having a light-emitting pattern defined in advance from the sub-pixel data corresponding to the data of the image where data of an image having the pattern, in which only one pixel positioned at the center emits light, exist according to the result of the first searching step;
a step of correcting a light-emitting pattern so that the contrast becomes high where sub-pixel data having the light-emitting pattern defined in advance, exist according to the result of the second searching step; and
a step of allocating the sub-pixel data to the light-emitting elements corresponding thereto after the correcting step and performing display with the display device(3).

13. The display method as set forth in Claim 12, wherein said image data to be displayed are binary image data.

14. The display method as set forth in Claim 12, wherein in said second searching step, the light-emitting pattern defined in advance is a pattern in which a set composed of sub-pixels of B and R adjacent to each other of the three primary colors R, G and B emits light in isolation in said first direction;
in said correcting step, said pattern is corrected to a pattern in which any one of the sub-pixels constituting said set is caused to emit light, and sub-pixel adjacent to the sub-pixel caused to emit light is caused to emit light.

15. A display method which performs display with a display device(3), with which three light-emitting elements, which respectively emit light of the three primary colors of R, G, and B, are aligned in a fixed order to form one pixel, such pixels are aligned in the first direction to form one line, and a plurality of such lines are provided in a second direction, that is orthogonal to the first direction, to form a display screen, comprising the steps of:
generating binary sub-pixel data by determining a state of emitting light or a state of not emitting light on the basis of a threshold value defined in advance, with respect to multiple-value sub-pixel data, which are obtained from multiple-value image data to be displayed;
searching binary sub-pixel data having a light-emitting pattern defined in advance from the binary sub-pixel data;
correcting a light-emitting pattern of the multiple-value sub-pixel data corresponding to the searched binary sub-pixel data so that the contrast becomes high where binary sub-pixel data having the light-emitting pattern defined in advance are searched in the searching step; and
allocating multiple-value sub-pixel data to light-emitting elements corresponding thereto after the correcting step, and performing display with the display device(3).

16. The display method as set forth in Claim 15, wherein in said step of generating binary sub-pixel data, a state where light is emitted or a state where no light is emitted is determined, dependent upon a magnitude when multiple-value sub-pixel data corresponding to one sub-pixel are compared with said threshold value defined in advance, and binary sub-pixel data corresponding to said multiple-value sub-pixel data are generated.

17. The display method as set forth in Claim 15, wherein in said second searching step, the light-emitting pattern defined in advance is a pattern in which a sub-pixel of B of the three primary colors R, G and B emits light in isolation in said first direction,
in said correcting step, taking note of multiple-value sub-pixel data corresponding to the sub-pixel of B that emits light in isolation, the noted multiple-value sub-pixel data are corrected to multiple-value sub-pixel data adjacent to one side thereof, and multiple-value sub-pixel data adjacent to the other side thereof are corrected to the noted multiple-value sub-pixel data.

18. The display method as set forth in Claim 15, wherein in said correcting step, the light-emitting pattern defined in advance is a pattern in which a sub-pixel of B of the three primary colors R, G and B emits light in isolation in said first direction,
in said correcting step, taking note of multiple-value sub-pixel data corresponding to the sub-pixel of B that emits light in isolation, multiple-value sub-pixel data adjacent to one side of the noted multiple-value sub-pixel data are corrected to the noted multiple-value sub-pixel data

19. The display method as set forth in Claim 15, wherein in said correcting step, the light-emitting pattern defined in advance is a pattern in which a set composed of sub-pixels of B and R adjacent to each other of the three primary colors R, G and B emits light in isolation in said first direction;
in said correcting step, taking note of multiple-value sub-pixel data corresponding to a sub-pixel of B and a sub-pixel of R, which constitute said set, multiple-value sub-pixel data corresponding to one sub-pixel constituting said set are corrected to multiple-value sub-pixel data adjacent thereto, multiple-value sub-pixel data corresponding to the other sub-pixel constituting said set are corrected to said one sub-pixel data constituting said set, multiple-value sub-pixel data adjacent to the multiple-value sub-pixel data corresponding to said other sub-pixel constituting said set are corrected to said other sub-pixel data constituting said set.

20. A display apparatus comprising:
a display device(3), in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen;
means(7) for correcting a light-emitting pattern so that the contrast becomes high where sub-pixel data having a light-emitting pattern defined in advance exist in sub-pixel data obtained from data of an image to be displayed; and
means(2) for allocating sub-pixel data to the light-emitting elements corresponding thereto after the correction made by said correcting means(7) and making the display device(3) perform display.

21. A display apparatus comprising:
a display device(3), in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen;
means(40) for magnifying data of an image to be displayed, by two times in the first direction to generate sub-pixel data; and
means(2) for allocating the sub-pixel data to light-emitting elements corresponding thereto and making the display device(3) perform display.

22. A display apparatus comprising:
a display device(3), in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen;
two-time magnifying means(40) for searching data of an image having a pattern, in which only one pixel positioned at the center emits light, from three pixels adjacent to each other in the first direction among image data to be displayed, and for generating sub-pixel data by magnifying the image data to be displayed, by two times in the first direction;
means(41) for searching sub-pixel data having a light-emitting pattern defined in advance, from the sub-pixel data corresponding to the image data where image data having the pattern, in which only one pixel positioned at the center emits light, exist according to the result of search by the two-time magnifying means(40), and correcting the light-emitting pattern, so that the contrast becomes high, where sub-pixel data having the light-emitting pattern defined in advance exist according to the result of the search; and
means(2) for allocating the sub-pixel data to the light-emitting elements corresponding thereto after the correction by the correcting means(41) and making the display device(3) perform display.

23. A display apparatus comprising:
a display device(3), in which three light-emitting elements, which respectively emit light of the three primary colors of R, G, and B, are aligned in a fixed order to form one pixel, the pixels are aligned in a first direction to form one line, and a plurality of such lines are aligned in a second direction, which is orthogonal to the first direction, to form the display screen;
means(90) for generating binary sub-pixel data by determining a state of emitting light or a state of not emitting light on the basis of a threshold value defined in advance, with respect to sub-pixel data of multiple values, which are obtained from multiple-value image data to be displayed;
means(95) for searching binary sub-pixel data having a light-emitting pattern defined in advance from the binary sub-pixel data and correcting a light-emitting pattern of the multiple-value sub-pixel data corresponding to the searched binary sub-pixel data so that the contrast becomes high; and
means(2) for allocating multiple-value sub-pixel data to light-emitting elements corresponding thereto after the correction by the correcting means(95), and making the display device(3) perform display.
